# DEMANDE DE BREVET EUROPEEN

(11) **EP 0 751 661 A1**
(43) Date de publication de la demande: **02.01.1997**
(21) Numéro de dépôt: 96401311.4
(22) Date de dépôt: 17.06.1996
(51) Int. Cl.: H04M 11/04

(54) **Système transmetteur téléphonique d'alarme**

(30) Priorité: 26.06.1995 FR 9507659
(71) Demandeur: SEB S.A., F-69130 Ecully (FR)
(72) Inventeur: De Wasseige, Patrick, 74150 Moye (FR); Duborper, Alain, 74150 Sales (FR)
(74) Mandataire: Lepercque, Jean

(57) **Abrégé**

Selon l'invention, le poste téléphonique local (3) est relié à la ligne téléphonique (2) via des circuits intermédiaires, partie intégrante du transmetteur (1). Ces circuits comprennent préférentiellement deux relais électromagnétiques (11, 13). En mode normal, le poste téléphonique local (3) est reliée directement à la ligne téléphonique (2). Sur détection d'alarme, les deux relais (11, 13) commutent et les circuits internes (10) du transmetteur sont reliés à la ligne téléphonique (2) et sont rendus prioritaires par rapport au poste téléphonique local (3). Après détection de la tonalité, le transmetteur (1) renvoi l'alarme à des numéros pré-établis. La programmation du transmetteur (1) s'effectue directement par l'intermédiaire du clavier (31) du poste téléphonique (3), le menu étant transmis sous forme de messages audiophoniques dans l'écouteur (300).

## Description

L'invention concerne un système transmetteur téléphonique d'alarmes.

De nombreux types de transmetteurs téléphoniques d'alarmes sont connus. Ils permettent de répercuter et par le moyen d'une ligne téléphonique classique, sur des numéros de téléphone pré-établis, des incidents détectés par des capteurs, de différents types, disposés dans des locaux à surveiller pendant l'absence de leurs occupants. Ces incidents peuvent être de divers ordres : alarme sur détection d'une consigne préétablie, détection d'une tentative d'intrusion ou une effraction, etc.

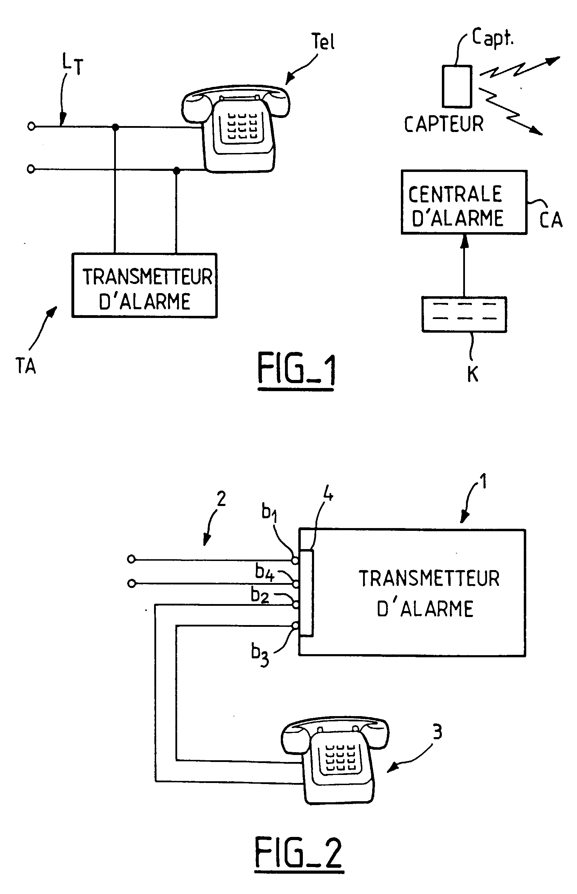

La figure 1, annexée à la présente description, illustre schématiquement l'architecture générale de ces systèmes. Ils comprennent habituellement une centrale d'alarme CA recevant des informations de capteurs précités, dont un seul a été représenté Cₐₚₜ : capteurs d'intrusion, etc. La centrale d'alarme CA est programmée à l'aide d'un organe de programmation de type clavier ou analogue. Ce clavier est localisé à un endroit déterminé et dédié à cette fonction. La centrale d'alarme communique avec le transmetteur téléphonique proprement dit, TA. Par ailleurs, un poste téléphonique est normalement connecté sur la ligne téléphonique.

Dans les dispositifs de l'Art Connu, ce transmetteur TA est connecté en parallèle sur la ligne téléphonique LT desservant les locaux à surveiller.

Cette architecture présente de nombreux inconvénients.

Tout d'abord, comme il a été signalé, le fait d'utiliser un clavier dédié augmente le prix de l'installation. D'autre part, il est nécessaire, pour programmer la centrale, de se déplacer à l'endroit où est localisé ce clavier.

En outre, ce système ne présente pas une sécurité maximale lors d'incidents détectés de type "intrusion ou effraction".

En effet, on peut décrocher le combiné si l'on a réussi à s'introduire dans les locaux surveillés, ce qui interdit un renvoi d'alarme. On peut encore, à l'aide d'un téléphone portable composer le numéro de téléphone attribué à l'occupant des locaux surveillés par la centrale CA et laisser sonner en permanence. Cette façon de procéder permet de monopoliser la ligne téléphonique LT et interdit la répercussion des alarmes éventuellement détectées.

L'invention vise à pallier les inconvénients des systèmes de l'Art Connu, dont certains viennent d'être rappelés.

Selon une première caractéristique importante de l'invention, la programmation ne s'effectue plus à l'aide d'un clavier spécialisé, mais directement par l'intermédiaire du clavier du téléphone local.

Cette disposition présente plusieurs avantages. Le coût est moindre, mais surtout la centrale d'alarme peut être disposée dans des endroits peu accessibles puisqu'il n'est pas nécessaire d'y avoir accès pour la programmer, cette programmation s'effectuant à distance à l'aide du clavier du poste téléphonique local. On peut donc la cacher, ce qui rend une intervention malveillante plus difficile. On peut en outre, a posteriori, "récupérer" les messages d'alerte (défauts du matériel détectés ou alertes) sans avoir à se déplacer. Il suffit de disposer d'un organe de synthèse vocal à l'intérieur de la centrale, les messages étant transmis sous forme audiophonique à l'écouteur du combiné, ou éventuellement au haut-parleur du poste téléphonique, si celui-ci peut fonctionner en mode dit "conférence".

Selon une seconde caractéristique importante de l'invention, le transmetteur n'est plus branché en parallèle sur la ligne téléphonique et on rend le système d'alarme prioritaire par rapport au poste téléphonique ou à tous les postes téléphoniques, principal et auxiliaire(s), si l'installation en comporte plusieurs.

Cette dernière disposition permet de pallier l'inconvénient précédemment signalé : en effet, lors d'une intrusion, le combiné peut être décroché sans "inconvénient", le renvoi d'alarme sera quand même effectué.

L'invention a donc pour objet un système transmetteur téléphonique d'alarme pour une installation de surveillance d'une zone déterminée, installation comprenant une ligne téléphonique, une centrale d'alarme communiquant avec le système transmetteur téléphonique d'alarme, et au moins un poste téléphonique local, caractérisé en ce que ledit poste téléphonique local est connecté à la ligne téléphonique via des circuits internes audit transmetteur téléphonique d'alarme présentant deux états, en ce que ces circuits sont sous le contrôle de circuits de détection d'alarme de manière à connecter directement le poste téléphonique à ladite ligne téléphonique dans un premier état, dit normal, en l'absence d'alarme, et à des circuits déterminés du transmetteur téléphonique d'alarme dans un second état, lors de la détection d'un événement prédéterminé par lesdits circuits de détection d'alarme, de manière à rendre prioritaire lesdits circuits déterminés par rapport au poste téléphonique et à initier le renvoi de ladite alarme sur au moins un numéro de téléphone prédéterminé.

L'invention sera mieux comprise et d'autres caractéristiques et avantages apparaîtront à la lecture de la description qui suit en référence aux figures annexées, et parmi lesquelles :
- La figure 1 illustre schématiquement l'architecture d'un système d'alarme muni d'un transmetteur téléphonique d'alarme selon l'Art Connu ;
- La figure 2 illustre schématiquement un exemple d'architecture de système d'alarme muni d'un transmetteur téléphonique d'alarme selon l'invention ;
- La figure 3 illustre de façon plus détaillée le transmetteur téléphonique d'alarme de la figure 2 ;
- La figure 4 est un organigramme illustrant les étapes de surveillance de la tension véhiculée par la ligne téléphonique.

La figure 2 illustre schématiquement l'architecture d'un transmetteur d'alarme 1 selon l'invention. Contrairement au transmetteur d'alarme des systèmes selon l'Art Connu (voir figure 1), le transmetteur d'alarme 1 n'est plus branché en parallèle sur le poste téléphonique local 3.

On supposera dans ce qui suit, dans un but de simplification, que l'installation ne comporte qu'un seul poste téléphonique (dit principal), sans que ce la limite en quoi que ce soit la portée de l'invention. En effet, comme il a été rappelé, un ou plusieurs postes auxiliaires (ou secondaires) peuvent être prévus. De même, on n'a représenté que les dispositifs essentiels à la bonne compréhension de l'invention. En particulier, la centrale d'alarme (figure 1 : CA) et les capteurs (Cₐₚₜ) n'ont pas été représentés. En effet, à l'exception du fait, selon l'une des caractéristiques importantes de l'invention, qu'il n'est plus nécessaire de prévoir un clavier dédié (K) pour la programmation de la centrale d'alarme précitée, ces éléments peuvent être tout à fait similaires, sinon identiques à ceux utilisés dans les systèmes de l'Art Connu. De même dans un but de simplification, le transmetteur téléphonique d'alarme sera appelé ci-après, transmetteur.

Selon une première caractéristique importante de l'invention, la ligne téléphonique 2 est connectée directement au transmetteur d'alarme 1. Le poste téléphonique 3 est également connecté à ce transmetteurs d'alarme 1. Avantageusement, les connexions peuvent s'effectuer à l'aide d'un connecteur 4 du type dit "modular jack", connu commercialement sous l'appellation "Rjxx", "xx" étant deux chiffres caractérisant la configuration matérielle du connecteur (nombre de liaisons, etc.). Dans le cas présent, on peut utiliser un connecteur du type "RJ11". La ligne téléphonique 2 est connectée aux bornes b₁ et b₄ du transmetteur 1 (bornes 1 et 4 du connecteur "RJ11") et le poste téléphonique 3, aux bornes b₂ et b₃ (bornes 2 et 3 du connecteur "RJ11"). Ce type de prise est dit "à coupure", en ce sens que les points "1" et "3" (bornes b₁ et b₃ du transmetteur 1) ne sont pas reliés entre eux.

De façon préférentielle, le poste téléphonique 3 est du type à fréquence vocale.

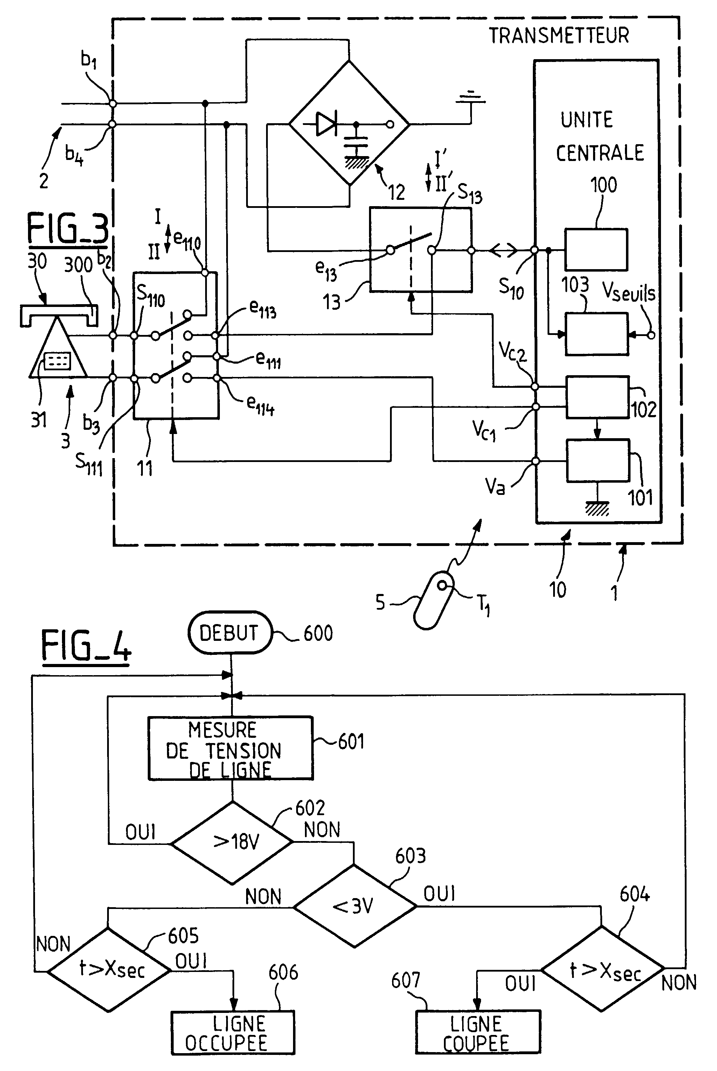

Le fonctionnement du transmetteur va maintenant être explicité en regard de la figure 3.

Celle-ci illustre, de façon plus détaillée, les principaux composants de ce transmetteur 1.

Il comprend tout d'abord une unité centrale 10 dont l'architecture diffère peu d'un transmetteur téléphonique d'alarme classique. Cette unité centrale 10 comprend des organes de calcul, des organes de traitement de signal des signaux reçus de la centrale d'alarme CA (figure 1), des organes de détection des fréquences vocales reçues du poste téléphonique 3 et de synthèse vocale. Ces circuits, en soi, sont bien connus de l'Homme de Métier, et il et inutile de les redécrire.

Par contre, d'une part, cette unité centrale 10 n'est pas connectée directement sur la ligne téléphonique (en parallèle) comme dans le cas du système illustré par la figure 1 et, d'autre part, des circuits particuliers supplémentaires sont prévus, dont l'utilité va être explicitée ci-après.

Parmi les organes spécifiques à l'invention, on compte un premier relais 11, à deux positions et deux voies, et un second relais 13, du type interrupteur à une voie.

On a également représenté sur la figure 3 un interface téléphonique 12 de façon classique essentiellement constitué d'un pont de redresseurs et de circuits de filtrage de la tension alternative véhiculée par la ligne téléphonique 2.

Les bornes b₁ et b₄ de la ligne téléphonique 2 sont connectées aux bornes d'entrée e₁₁₀ et e₁₁₁ du relais 11. Les bornes de sortie s₁₁₀ et s₁₁₁ de ce relais 11 sont connectées aux bornes b₂ et b3, c'est-à-dire au poste téléphonique 3. Les deux autres entrées, e₁₁₃ et e₁₁₄, sont connectées à la sortie s₁₃ du relais 13 et à une tension d'alimentation Va, respectivement.

Le relais est commandé par un signal de commande V_{C1} délivré par l'unité centrale 10.

En mode normale ou position de repos du relais 11 (position I), la ligne téléphonique est connectée en permanence au poste téléphonique 3, via e₁₁₀-s₁₁₀ et e₁₁₁-s₁₁₁, respectivement. Ce poste 3 fonctionne donc comme un poste téléphonique normal. A titre d'exemple non limitatif, on suppose que le signal V_{C1} de commande est un signal binaire, à l'état "0" logique en mode normal.

On va tout d'abord expliciter la phase préliminaire de programmation du transmetteur 1, et plus particulièrement des circuits de l'unité centrale 10.

De façon avantageuse, comme il a été indiqué, on suppose que le transmetteur est disposé dans un endroit peu accessible, non visible de l'endroit où se trouve le poste téléphonique 3. On dispose avantageusement, dans ce cas, d'une télécommande 5 reliée par ondes radio avec l'unité centrale 10. L'appui sur une touche particulière, T₁, prévue à cet effet, provoque alors le la commutation du signal de commande V_{C1} de la position "0" logique à la position "1" logique, ce qui provoque le basculement du relais 11 de la position I à la position II. Cette touche peut être la touche "marche/arrêt" du système. Le poste téléphonique 3 n'est plus alors connecté à la ligne téléphonique 2. II est alimenté par une tension Va, préférentiellement de 14 V, via les bornes e₁₁₄, s₁₁₁ et b₃. Cette tension est générée par des circuits d'alimentation 101, internes à l'unité centrale 10. Il reçoit, en outre, via les bornes e₁₁₃, s₁₁₀ et b₂, les signaux présents sur la sortie s₁₀ de l'unité centrale 10. Ces signaux sont constitués de signaux de synthèse vocale délivrés par un organe 100. Si l'usager décroche le combiné 30, celui-ci est à même de recevoir, dans l'écouteur 300, une séquence de consignes qu'il peut valider sélectivement en appuyant sur une des touches du clavier 31 du poste téléphonique 3. A titre d'alternative, si le poste téléphonique est susceptible de fonctionner en mode dit "conférence", les consignes sont débitées dans le haut-parleur (non représenté). La séquence précitée constitue le "menu général" de programmation.

On a supposé implicitement que l'organe de synthèse vocale 100 fonctionne en émission et réception. Naturellement, on peut également mettre en oeuvre deux circuits séparés, pour l'émission et la réception, respectivement.

La détection du raccrochement du combiné 30 provoque la commutation inverse du signal de commande V_{C1}, de l'état "1" à l'état "0" et, corrélativement, le retour à l'état de repos (état I) du relais 11. Le poste téléphonique redevient alors un poste téléphonique normal.

On constate donc que, selon une première caractéristique de l'invention, la programmation du transmetteur 1 peut s'effectuer à distance, à l'aide du clavier du poste téléphonique local.

On va maintenant décrire les opérations de détection et de renvoi d'alarme.

Lors de la détection d'une alarme, le système d'alarme renvoi au transmetteur 1 des signaux caractérisant le type d'alarme. En soi, cette opération est classique et s'effectue selon des règles communes à l'Art Connu.

Si le renvoi d'alarme à été validé, le transmetteur 1 va renvoyer cette alarme sur des numéros de téléphones prédéterminés, et selon une séquence également prédéterminée. A titre d'exemple, la séquence comprend avantageusement trois numéros de téléphone préprogrammés.

Pour ce faire, l'unité centrale 10 force de nouveau le signal de commande V_{C1} à "1" ce qui entraîne le basculement du relais 11 à l'état II. Cependant, contrairement à la phase de programmation, le poste téléphonique 3 n'est plus alimenté par la tension Va. En d'autres termes, l'unité centrale 10 ne génère plus cette tension.

L'unité centrale 10, et plus particulièrement des circuits de détection d'alarme représentés sous la référence générale 102, génère un second signal de commande V_{C2}, de type binaire. On suppose que celui-ci est à l'état "0" logique à l'état normal ou de repos. Lors de la détection d'alarme précitée, ce signal de commande V_{C2} va être commuté à l'état "1" et entraîner le basculement du second relais d'un premier état ou état de repos (état I') à un second état (état II'). Les circuits de détections 102 coupent également les circuits d'alimentation 101, générant la tension Va.

Le poste téléphonique 3 se retrouve alors connecté, via les bornes b₂ du transmetteur 1, e₁₁₃ et s13 du relais 11, e13 et s13 du relais 13 à l'interface téléphonique 12 et, de ce fait, à la ligne téléphonique 2.

Le transmetteur 1, plus précisément l'unité centrale 10, reçoit également le signal présent sur la borne s₁₃ du relais 13. Après détection de la présence de la tonalité sur la ligne 2, le transmetteur 1 appelle le premier numéro de téléphone préprogrammé, puis le deuxième, puis le troisième (toujours en supposant qu'il y ait trois numéros préprogrammés) jusqu'à réception de l'acquittement par le correspondant. Ces appels s'effectuent via la sortie s₁₃ de l'unité centrale 10 et l'organe de synthèse vocale 100. Celui-ci génère les signaux audiophoniques nécessaires à la numérotation, sous la commande de circuits de traitement de signaux (non représentés). En soi, cette procédure est commune à l'Art Connu et ne nécessite pas d'être redécrite. Les signaux sont transmis sur la ligne téléphonique 2, via les relais 13 et 11 et le poste téléphonique 3.

L'activation du relais 1, sans alimenter le poste 3, rend ainsi le renvoi d'alarme prioritaire par rapport au poste téléphonique, selon un second aspect important de l'invention. En effet, le poste est connecté sur transmetteur, mais n'est pas alimenté normalement.

D'autres fonctions peuvent avantageusement être prévues.

Dans une variante préférée de réalisation du transmetteur 1, on alimente les circuits électriques de celui-ci à l'aide de piles. On prévoit avantageusement des circuits détectant l'usure de ces piles. On peut faire appel à de nombreux circuits classiques pour effectuer ce contrôle. Un signal permanent est généré lorsque les piles arrivent en limite d'utilisation. Il suffit d'associer aux circuits de contrôle précités un circuit de type bascule. Ce signal est pris en compte, au même titre que les autres alarmes et peut être "récupéré à distance dans l'écouteur 300 du combiné 30, selon la procédure rappelée.

Il est également avantageux de surveiller l'état de la ligne téléphonique 2 pour prévenir les actes de malveillance, notamment détecter la coupure anormale de cette ligne 2.

Pour ce faire, lorsque la fonction surveillance est enclenchée, le transmetteur surveille l'état de la ligne 2 par le biais de la mesure de la valeur de la tension de ligne.

Pour ce faire il suffit de prévoir un organe comparateur de tension103, comparant la tension de sortie de l'interface téléphonique 12 avec des valeurs tension de seuils Vₛₑᵤᵢₗₛ générées, de façon classique, à l'intérieur de l'unité centrale 10. Naturellement, cet organe comparateur de tension est sous la commande des circuits généraux de calcul et traitement de signal (non représentés), à logique programmée ou câblée. Il peut s'agir avantageusement d'un microprocesseur ou d'un microcontrôleur spécialisé, associé à des mémoires de programme, ce de façon classique.

Le processus de surveillance la ligne téléphonique s'effectue selon l'organigramme de la figure 4, sous la conduite des circuits de commande précités.

L'étape 600 représente le début du processus, au temps t₀ arbitraire. A l'étape 601, il est procédé à une mesure de la tension de ligne téléphonique. A l'étape 602, la valeur mesurée est comparée à une première valeur de tension de seuil.

Pour fixer les idées, on suppose que ce premier seuil est fixé à 18 V, compte-tenu des spécifications normalisées des tensions de lignes téléphoniques. La valeur de la tension de ligne est considérée comme normale.

Si la comparaison est positive (valeur mesurée supérieure à 18 V), le processus est réitéré : étapes 601 et 602.

Si la comparaison est négative, la valeur précédemment mesurée est comparée, à l'étape 603, à un second seuil, inférieur au premier, par exemple 3 V. Si la valeur mesurée n'est pas inférieure à 3 V, on effectue un test de durée. Si la durée n'est pas supérieure à un premier intervalle de temps prédéterminé, par exemple exprimé en seconde, le processus de test est également réitéré. Les signaux d'horloge nécessaire à la détermination de cet intervalle de temps sont générés par les circuits de commande précités.

Par contre, si ce dernier test est positif, il en est conclu que la ligne téléphonique 2 est occupée (étape 606) et cet état peut être enregistré dans les circuits de détection d'incidents.

A l'étape 603, si la comparaison est positive (tension inférieure à 3V), un test supplémentaire est réalisé en 604 consistant, comme à l'étape 605, en un test de durée. Si la durée n'est pas supérieure à un second intervalle de temps prédéterminé, le processus de test est également réitéré. Ce second intervalle de temps peut d'ailleurs être égal au premier, selon les besoins de l'application.

Par contre, si ce dernier test est positif, il en est conclu que la ligne téléphonique 2 est coupée : étape 607. On suppose alors qu'il s'agit d'un acte de malveillance. L'unité centrale communique alors cet état à la centrale d'alarme CA (figure 1) qui enclenche une sirène. De plus, si le renvoi est activé, le processus de renvoi s'effectue de façon habituelle par composition automatique des numéros de téléphone préprogrammés, dès que la ligne sera rétablie.

Enfin si l'usager essaie de mettre en fonction le système d'alarme, avant de quitter les locaux surveillés, et que l'état "ligne coupée" est détecté (figure 4 :étape 607), la sirène d'alarme s'enclenche de façon analogue à ce qui vient d'être décrit ci-dessus. L'usager est donc averti de cet état anormal.

De la même manière, l'état "ligne occupée" peut déclencher l'alarme lorsque l'usager essaie de mettre en fonction le système d'alarme, avant de quitter les locaux surveillés. De cette manière, l'usager ne quittera pas les lieux en laissant par inadvertance le combiné 30 décroché.

A la lecture de ce qui précède, on constate aisément que l'invention atteint bien les buts qu'elle s'est fixés.

Il doit être clair cependant que l'invention n'est pas limitée aux seuls exemples de réalisations précisément décrits, notamment en relation avec les figures 2 à 4.

Notamment, dans une variante de réalisation non illustrée, si le poste téléphonique est muni d'un écran de visualisation, par exemple un écran à cristaux liquides, la synthèse vocale pourrait être remplacée par un affichage en clair sur l'écran, de manière séquentielle, des différentes options du menu de programmation.

De même les différents exemples numériques n'ont été donnés que pour mieux illustrer l'invention. Il va de soi, notamment, que les valeurs de tensions de ligne téléphonique dépendent des normes en vigueur dans un pays donné.

Enfin l'invention n'est pas limitée à une configuration de système d'alarme, ni à des capteurs de type précis. Les différents circuits nécessaires à la réalisation du transmetteur, en particulier ceux spécifiques à l'invention, peuvent faire appel à des technologies diverses. Les relais, notamment, peuvent être de type classique (relais électromagnétique) ou être réalisés à base de commutateurs électroniques.

La ligne téléphonique peut être reliée au réseau téléphonique public ou, au contraire, à un réseau privé sans sortir du cadre de l'invention.

## Revendications

1. Sytème transmetteur téléphonique d'alarme (1) pour une installation de surveillance d'une zone déterminée, installation comprenant une ligne téléphonique (LT), une centrale d'alarme (CA) communiquant avec le système transmetteur téléphonique d'alarme (1), et au moins un poste téléphonique local (3), caractérisé en ce que ledit poste téléphonique local (3) est connecté à la ligne téléphonique (LT) via des circuits internes audit transmetteur téléphonique d'alarme (1) présentant deux états, en ce que ces circuits sont sous le contrôle de circuits de détection d'alarme (102) de manière à connecter directement le poste téléphonique (3) à ladite ligne téléphonique (LT) dans un premier état, dit normal, en l'absence d'alarme, et à des circuits déterminés (100) du transmetteur téléphonique d'alarme (1) dans un second état, lors de la détection d'un événement prédéterminé par lesdits circuits de détection d'alarme (102), de manière à rendre prioritaire lesdits circuits déterminés (100) par rapport au poste téléphonique (3) et à initier le renvoi de ladite alarme sur au moins un numéro de téléphone prédéterminé.

2. Système selon la revendication 1, caractérisé en ce que le poste téléphonique local (3) est du type à fréquence vocale et lesdits circuits déterminés (100) comprennent un synthétiseur vocal.

3. Système selon selon l'une des revendications 1 ou 2, caractérisé en ce que lesdits circuits internes présentant deux états comprennent des premiers (11) et seconds (13) moyens à deux états stables, en ce que les premiers moyens (11) connectent ledit poste téléphonique local (3) à ladite ligne téléphonique (2), dans un premier état, dit de repos, en ce qu'il comprend des circuits de commande (102) générant un premier signal de commande (V_{C1}), basculant les premiers moyens (11) dudit premier état au second état stable, déconnectant le poste téléphonique local (3) de la ligne téphonique (2), et un second signal de commande (V_{C2}), basculant les seconds moyens (13), dudit premier état au second état stable, connectant la ligne téléphonique (2) auxdits circuits déterminés (100), et en ce qu'il comprend des moyens (100) pour détecter un état de tonalité sur ladite ligne téléphonique (2) et sur cette détection à initier ledit renvoi d'alarme à au moins un numéro de téléphone prédéterminé.

4. Système selon la revendication 3, caractérisé en ce que lesdits premiers moyens à deux états stables sont constitués par un relais (11) à deux voies commandé par ledit premier signal de commande (V_{C1}) et les seconds moyens à deux états stables sont constitués par un relais (13) monovoie commandé par ledit second signal de commande (V_{C2}).

5. Système selon l'une des revendications 3 ou 4, caractérisé en ce qu'il comprend en outre un dispositif (5) initiant une phase de programmation des fonctions à remplir par le transmetteur téléphonique d'alarme, en ce que ce dispositif agit sur lesdits circuits de commande (102) de manière à activer ledit premier signal de commande (V_{C1}) et à faire basculer lesdits premiers moyens à deux états stables (11), du premier état au second état, en ce qu'il comprend en outre un générateur (101) de tension d'alimentation (Va), commandé par lesdits circuits de commande (102), en ce que cette tension d'alimentation (Va) est transmise par lesdits premiers moyens à deux états stables (11) audit poste téléphonique local (3), en ce que celui-ci est également connecté, par lesdits premiers moyens à deux états stables (11), auxditx circuits déterminés (100), et en ce que ceux-ci délivrent une séquence de messages audiophoniques dans l'écouteur (300) du combiné (30) du poste téléphonique (3), formant un menu de programmation, de manière à pouvoir programmer le transmetteur téléphonique à l'aide de touches déterminées (31) du clavier de ce poste téléphonique local (3).

6. Système selon la revendication 5, caractérisé en ce que ledit dispositif est une télécommande (5) communiquant avec le transmetteur téléphonique d'alarme par onde radio et comportant au moins une touche (T₁) initiant ladite phase de programmation.

7. Système selon l'une quelconque des revendications 3 à 6, caractérisé en ce qu'il comprend en outre des moyens (103) pour surveiller l'état de ladite ligne téléphonique (2) de manière à détecter des états anormaux et à déclencher une alarme.

8. Système selon la revendication 7, caractérisé en ce que, pour ladite surveillance de l'état de la ligne téléphonique (2), il comprend des moyens de mesure (601) de la tension véhiculée par cette ligne téléphonique, de comparaison (602, 603) à des seuils de référence (Vₛₑᵤᵢₗₛ), pendant des intervalles de temps préétablis (604, 605) et de détermination, à partir des résultats de ces comparaisons, d'un état dit normal et d'au moins un état anormal.

9. Système selon la revendication 8, caractérisé en ce que lesdits états anormaux comprennent l'état "ligne occupée" (606) et l'état "ligne coupée" (607) et en ce qu'il comprend des moyens de génération d'une alarme sonore sur détection de ces états.

10. Système selon l'une quelconque des revendications 7 à 9, caractérisé en ce que lesdits moyens de surveillance (103) sont sous la commande d'un microprocesseur à programme enregistré.
